# EUROPEAN PATENT APPLICATION

(11) **EP 4 446 672 A1**
(43) Date of publication of application: **16.10.2024**
(21) Application number: 24170112.7
(22) Date of filing: 12.04.2024
(51) Int. Cl.: F25B 49/02

(54) **SYSTEM AND METHOD FOR OPERATING PLURALITY OF EVAPORATOR UNITS**

(30) Priority: 14.04.2023 US 202363496189 P
(71) Applicant: Carrier Corporation, Palm Beach Gardens, FL 33418 (US)
(72) Inventor: HELLMANN, Sascha, 55241 Mainz-Kostheim (DE)
(74) Representative: Dehns

(57) **Abstract**

A system and method for operating a plurality of evaporator units (102) is disclosed. The method includes receiving, by a controller (202) communicably coupled to each evaporator unit (102), a current state of operation of the respective evaporator unit (102). A state of operation of each evaporator unit (102) includes first and second modes of operation. The method includes receiving, by the controller (202), a current speed of a fan of the respective evaporator unit (102). Responsive to the state of operation of the plurality of evaporator units (102), the method further includes operating, by the controller (202), each of the plurality of evaporator units (102), to change the speed of the respective fans (112) from a first speed to a speed different from the first speed. Operation of the fans (112) of the plurality of evaporator units (102) at the speed different from the first speed enables the plurality of evaporator units (102) to operate within a desirable range of cooling efficiency.

## Description

### CROSS-REFERENCE TO RELATED APPLICATION

This patent application claims the benefit of US Provisional Patent Application No. 63/496,189, filed on Apr 14, 2023, which is incorporated by reference herein in its entirety.

### BACKGROUND

This invention relates to operation of a plurality of evaporator units, and more particularly, to operating a plurality of evaporator units in such a way as to maintain their cooling efficiency and noise of operation.

A plurality of evaporator units may be coupled to a pump that may be configured to supply a cooled or heated fluid, such as liquid or gas, to a destination. In some cases, the destination may be industrial, commercial, or residential buildings. In such cases, the pump may be part of an air conditioning system adapted to supply conditioned air to the destination. Generally, large-capacity pumps may be used to supply the fluid to several buildings from a common source. Such an arrangement allows for the conditioning of large volumes of fluid at one location, thereby improving the conditioning efficiency of the pump. Further, such an arrangement may allow the buildings to be conditioned without requiring individual air conditioning equipment at the site of each building. However, due to the large capacity of the pump, a large amount of heat may be generated by the pump during operation. To extract the heat, the pump may be coupled with the plurality of evaporator units. Typically, the plurality of evaporator units may include an array of evaporator units coupled to a heat exchanger, which may be configured to facilitate heat exchange between the pump and circulating cooling fluid. The plurality of evaporator units may be provided to exchange heat with a heated circulating fluid, as the heated circulating fluid flows through the evaporator units. Typically, each evaporator unit includes a fan disposed therewithin. The fans may be operated at high speeds in order to facilitate a high volume of air through a cross-section of the fans to effect optimum cooling. Due to the high speeds of operation of the fans, the evaporator units tend to generate high noise. Due to the large number of evaporator units generally used, the collective sound of the evaporator units may be very high, thus necessitating the evaporator units to be placed away from where regular human activity may occur, which may not be very feasible in densely populated regions.

### SUMMARY

According to a first aspect, the present invention provides a method for operating a plurality of evaporator units. The method includes receiving, by a controller communicably coupled to each evaporator unit, a current state of operation of the respective evaporator unit. A state of operation of each evaporator unit includes first and second modes of operation. The method further includes receiving, by the controller, a current speed of the respective fans of each evaporator unit. Responsive to the state of operation of the plurality of evaporator units, the method further includes operating, by the controller, each of the plurality of evaporator units, to change the speed of the respective fans from a first speed to a speed different from the first speed. Operation of the respective fans of the plurality of evaporator units at the speed different from the first speed enables the plurality of evaporator units to operate within a desirable range of cooling efficiency.

Optionally, operation of the fans of the plurality of evaporator units at the speed different from the first speed enables a noise of operation of the plurality evaporator units to be less relative to the operation of the fans of the plurality of evaporator units in the first speed.

Optionally, the first and second modes of operation of each evaporation unit correspond to a cooling mode of operation and a defrost mode of operation, respectively. During the cooling mode of operation of an evaporator unit, a respective fan is configured to operate at a non-zero speed. During the defrost mode of operation of the evaporator unit, the respective fan is configured to stop operating.

Optionally, the first speed of a fan corresponds to a default operating speed of the fan.

Optionally, responsive to one or more evaporator units of the plurality of evaporator units changing from the first mode of operation to the second mode of operation, the method further includes operating, by the controller, the respective one or more evaporator units operating in the second mode of operation, to change the speed of the respective fans from a first speed to a second speed. Responsive to one or more evaporator units of the plurality of evaporator units changing from the first mode of operation to the second mode of operation, the method further includes operating, by the controller, the remaining of the plurality of evaporator units operating in the first mode of operation, to change the speed of the respective fans from the first speed to a third speed.

Optionally, the second speed of the fan corresponds to a stoppage of the fan. The third speed of the fan is greater than the first speed of the fan.

Optionally, the third speed of the fan is greater than the first speed of the fan by a factor of about 10% and about 60%.

Optionally, responsive to the one or more evaporator units of the plurality of evaporator units reverting from the second mode of operation to the first mode of operation, the method further includes operating, by the controller, the plurality of evaporator units operating in the first mode of operation, to change the speed of the respective fans from any of the second and third speeds to a fourth speed.

Optionally, the fourth speed of the fan corresponds to a non-zero speed of the fan lesser than the first speed of the fan.

Optionally, the fourth speed of the fan is lesser than the first speed of the fan by a factor of about 10% and about 60%.

According to a second aspect, the present invention provides a system for operating a plurality of evaporator units. The system includes a controller communicably coupled to each evaporator unit. The controller includes a processor and a memory communicably coupled to the processor. The memory stores instructions executable by the processor. The controller is configured to receive a current state of operation of the respective evaporator unit. A state of operation of each evaporator unit comprises first and second modes of operation. The controller is further configured to receive a current speed of the respective fans of each evaporator unit. Responsive to the state of operation of the plurality of evaporator units, the controller is further configured to operate each of the plurality of evaporator units, to change the speed of the respective fans from a first speed to a speed different from the first speed. Operation of the fans of the plurality of evaporator units at the speed different from the first speed enables the plurality of evaporator units to operate within a desirable range of cooling efficiency.

Optionally, operation of the fans of the plurality of evaporator units at the speed different from the first speed enables a noise of operation of the plurality evaporator units to be less relative to the operation of the fans of the plurality of evaporator units in the first speed.

Optionally, the first and second modes of operation of each evaporation unit correspond to a cooling mode of operation and a defrost mode of operation, respectively. During the cooling mode of operation of an evaporator unit, a respective fan is configured to operate at a non-zero speed. During the defrost mode of operation of the evaporator unit, the respective fan is configured to stop operating.

Optionally, the first speed of a fan corresponds to a default operating speed of the fan.

Optionally, responsive to one or more evaporator units of the plurality of evaporator units changing from the first mode of operation to the second mode of operation, the controller is further configured to operate the respective one or more evaporator units operating in the second mode of operation, to change the speed of the respective fans from a first speed to a second speed. Responsive to one or more evaporator units of the plurality of evaporator units changing from the first mode of operation to the second mode of operation, the controller is further configured to operate the remaining of the plurality of evaporator units operating in the first mode of operation, to change the speed of the respective fans from the first speed to a third speed.

Optionally, the second speed of the fan corresponds to a stoppage of the fan. The third speed of the fan is greater than the first speed of the fan.

Optionally, the third speed of the fan is greater than the first speed of the fan by a factor of about 10% and about 60%.

Optionally, responsive to the one or more evaporator units of the plurality of evaporator units reverting from the second mode of operation to the first mode of operation, the controller is further configured to operate the plurality of evaporator units operating in the first mode of operation, to change the speed of the fan from any of the second and third speeds to a fourth speed.

Optionally, the fourth speed of the fan corresponds to a non-zero speed of the fan lesser than the first speed of the fan.

Optionally, the fourth speed of the fan is lesser than the first speed of the fan by a factor of about 10% and about 60%.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included by way of example only to provide further understanding. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A is a schematic representation of an environment including a plurality of evaporator units for a pump, and a system for operating the plurality of evaporator units;
FIG. 1B illustrates an exemplary schematic view of a plurality of evaporator units;
FIG. 2 is a detailed schematic block diagram of a controller of the system for operating the plurality of evaporator units;
FIG. 3A is a schematic flow diagram for a method for operating the plurality of evaporator units;
FIG. 3B is a schematic flow diagram for a method for operating the plurality of evaporator units when one or more evaporator units change from a first mode to a second mode of operation;
FIG. 3C is a schematic flow diagram for a method for operating the plurality of evaporator units when the one or more evaporator units reverts from the second to the first mode of operation; and
FIG. 4 is an exemplary schematic block diagram of a hardware system used for implementing the controller of FIG. 2.

### DETAILED DESCRIPTION

The following is a detailed description of embodiments depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

The use of the term "about" with reference to a numerical value includes ±8% of the numerical value, expressly including any narrow range within the given range of the numerical value as well as the exact numerical value. For example, a temperature of "about" 100° C refers to a temperature from 92° C to 108° C, but also expressly includes any narrower range of temperature or even a single temperature within that range, including, for example, a temperature of exactly 100° C.

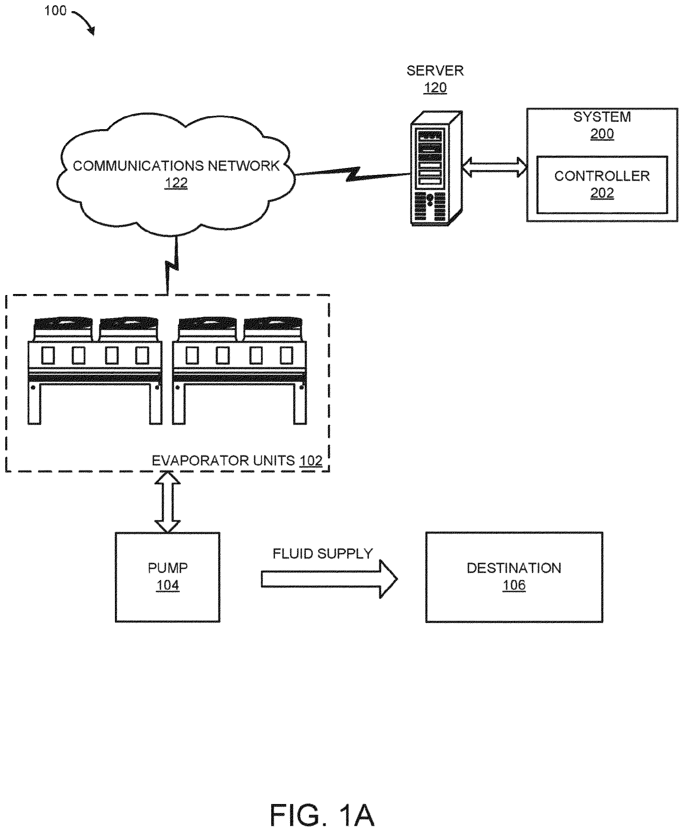

Referring to FIG. 1A, a schematic representation of an environment 100 including a plurality of evaporator units 102 for a pump 104, and a system 200 for operating the plurality of evaporator units 102 is shown. The pump 104 may be configured to supply a cooled or heated fluid, such as liquid or gas, to a destination 106. In one or more embodiments, the destination 106 may be industrial, commercial, or residential buildings. In such embodiments, the pump 104 may be part of an air conditioning system adapted to supply conditioned air to the destination 106. In many cases, large capacity pumps may be used to supply the fluid to several buildings from a common source. Such an arrangement allows for conditioning of large volumes of the fluid at one location, thereby improving the conditioning efficiency of the pump 104. Further, such an arrangement may allow the buildings to be conditioned without requiring individual air conditioning equipment at the site of each building. The pump 104 may have a capacity of equal to or greater than 1 Megawatt (MW). Due to the large capacity of the pump 104, a large amount of heat may be generated by the pump 104 during operation.

To extract the heat, the pump 104 may be coupled with the plurality of evaporator units 102. Typically, the plurality of evaporator units 102 may include an array of evaporator units 102 coupled to a heat exchanger (not shown in figure), which may be configured to facilitate a heat exchange between the pump 104 and a circulating cooling fluid. The plurality of evaporator units 102 may be provided to exchange heat with a heated circulating fluid, as the heated circulating fluid flows through the evaporator units 102.

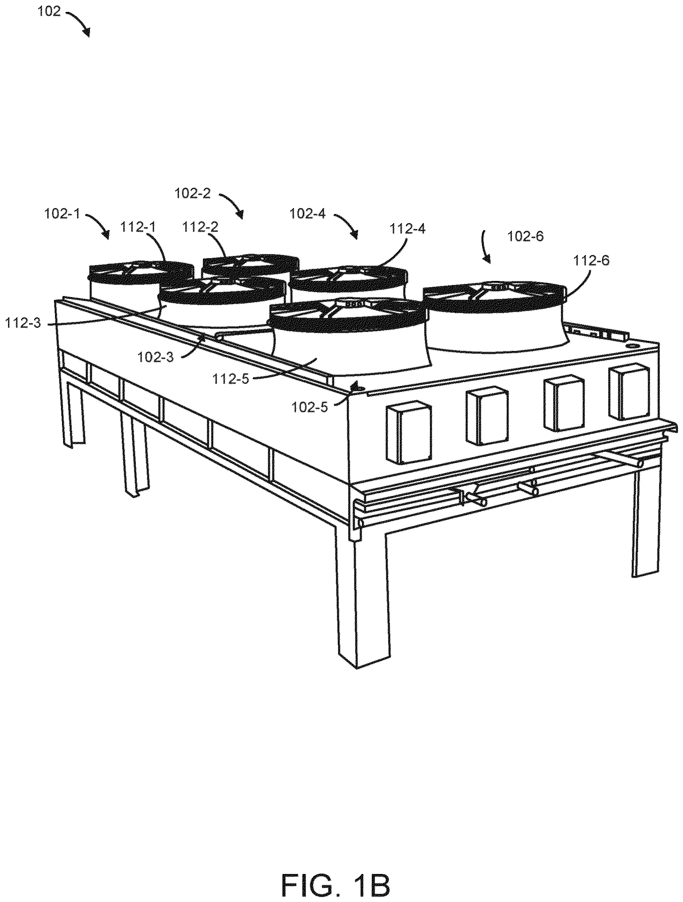

Referring to FIG. 1B an exemplary schematic view of a plurality of evaporator units 102 is shown. In the illustrated embodiment of FIG. 1B, the plurality of evaporator units 102 includes six evaporator units 102-1, 102-2, 103-3, 102-4, 102-5, 102-6. The evaporator units 102-1 to 102-6 may be collectively referred to as "the evaporator units 102". Each of the evaporator units 102 includes a fan 112-1 to 112-6, respectively, disposed therewithin. The fans 112-1 to 112-6 may be collectively referred to as "the fans 112". The fans 112 may be operated by a motor (not shown in the figure) to rotate at high speeds in order to facilitate high volume of air through a cross-section of the fans 112. The fans 112 may operate at speeds of about 200 revolutions per minute (RPM) to about 1200 RPM. Due to the high speeds of operation of the fans 112, the evaporator units 102 tend generate high noise. Each evaporator unit 102, depending on the speed of the respective fan 112, may generate a sound of about 20 decibels (dB) and about 80 dB. Due to the large number of evaporator units 102 generally used, the collective sound of the evaporator units 102 may be very high, thus necessitating the evaporator units 102 to be placed away from where regular human activity may occur, which may not be very feasible in densely populated regions.

Further, each of the plurality of evaporator units 102 may operate in two modes, namely, a first mode of operation and a second mode of operation. The first mode of operation may be a cooling mode, where the fan 112 of the evaporator units 102 operates. The second mode of operation may be a defrost mode, where, due to excess cooling, there may be an accumulation of frost in the evaporator unit 102 requiring the corresponding fan 112 to not operate in order to defrost the evaporator unit 102. Since a rate accumulation of frost may be difficult to predict, each evaporator unit 102 may enter the defrost mode of operation at different periods or instances of time. As a result, there may be a constant fluctuation in the noise generated by the plurality of evaporator units 102, as one or more evaporator units 102 enter the defrost mode of operation at different periods of time. The constantly fluctuating sound generated may cause disturbance to persons. Further, as one or more evaporator units 102 enter the defrost mode of operation at different periods of time, a net cooling provided by the plurality of evaporator units 102 may also fluctuate, resulting in the diminished cooling efficiency of the plurality of evaporator units 102.

Therefore, there is a need to operate the plurality of evaporator units 102 in such a way that the net cooling efficiency of the plurality of evaporator units 102 and the total noise generated by the plurality of evaporator units 102 are within desired ranges.

Referring now to FIGs. 1A and 1B, the environment 100 may include the system 200 implemented to operate the plurality of evaporator units 102. The system 200 includes a controller 202 communicably coupled to each of the plurality of evaporator units 102. The system 200 may be implemented on servers 120 provided in the environment 100. The servers 120 may be communicably coupled to each of the evaporator units 102 via a communication network 122 and may be configured to exchange data with each of the evaporator units 102. The data may include, without limitation, a current mode of operation of each of the evaporator units 102, a current speed of fan 112 of each of the evaporator units 102, a current state of accumulation of frost in each of the evaporator units 102, instructions to change a mode of operation for each of the evaporator units 102, and instructions to vary a speed of the fan 112 of each of the evaporator units 102. The servers 120 may be any, such as, without limitations, a stand-alone server, a remote server, cloud computing server, a dedicated server, a rack server, a server blade, a server rack, a bank of servers, a server farm, hardware supporting a part of a cloud service or system, a home server, hardware running a virtualized server, one or more processors executing code to function as a server, one or more machines performing server-side functionality as described herein, at least a portion of any of the above, some combination thereof, and the like. The communications network 122 may be a wired communication network or a wireless communication network. The wireless communication network may be any wireless communication network capable to transfer data between entities of that network such as, but are not limited to, a carrier network including circuit switched network, a public switched network, a Content Delivery Network (CDN) network, a Long-Term Evolution (LTE) network, a Global System for Mobile Communications (GSM) network and a Universal Mobile Telecommunications System (UMTS) network, an Internet, intranets, local area networks, wide area networks, mobile communication networks, combinations thereof, and the like.

The system 200 may be implemented by way of a single device or a combination of multiple devices that may be communicably coupled or networked together. In one instance, the system 200 may be implemented by way of a standalone device and may be communicably coupled to each of the evaporator units 102. In another instance, the system 200 may be implemented in each of the evaporator units 102. The system 200 may be implemented in hardware or a suitable combination of hardware and software. Further, the system 200 may also include other units such as a display unit, an input unit, an output unit and the like; however, the same are not shown in the FIG. 1A, for the purpose of clarity. Also, in FIG. 1A, only few units are shown; however, the system 200 may include multiple such units or the system 200 may include any such numbers of the units, obvious to a person skilled in the art or as required to implement the features of the present invention. The system 200 may be a hardware device including a processor executing machine-readable program instructions. The "hardware" may include a combination of discrete components, an integrated circuit, an application-specific integrated circuit, a field programmable gate array, a digital signal processor, or other suitable hardware. The "software" may include one or more objects, agents, threads, lines of code, subroutines, separate software applications, two or more lines of code or other suitable software structures operating in one or more software applications or on one or more processors. The processor may include, for example, without limitations, microprocessors, microcomputers, microcontrollers, digital signal processors, central processing units, state machines, logic circuits, any devices that manipulate data or signals based on operational instructions, and the like. Among other capabilities, the processor may fetch and execute computer-readable instructions in the memory operationally coupled with the system 200 for performing tasks such as data processing, input/output processing, feature extraction, and/or any other functions. Any reference to a task in the present disclosure may refer to an operation being or that may be performed on data.

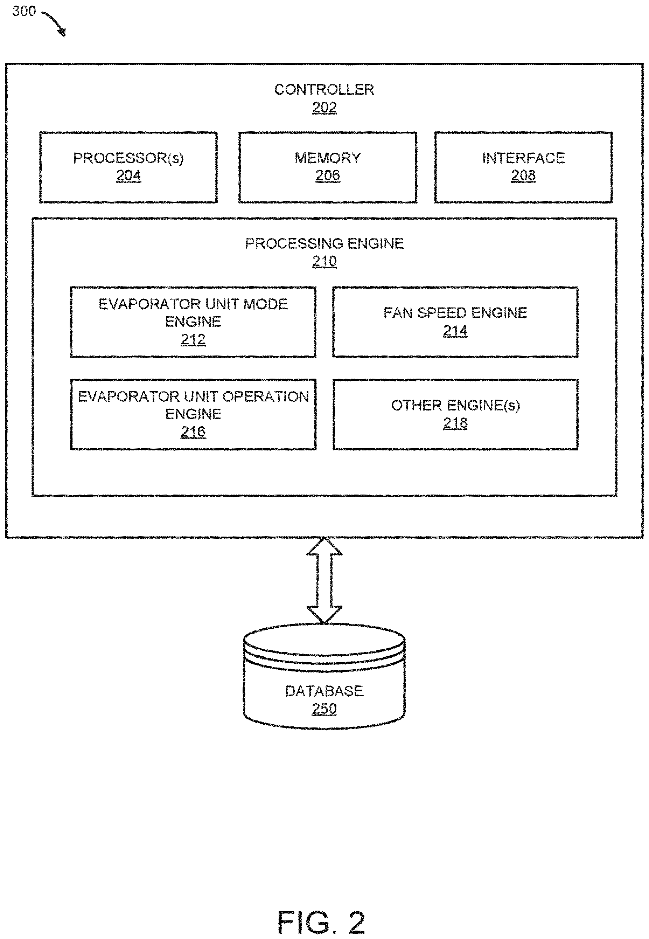

Referring to FIG. 2, a detailed schematic block diagram of the controller 202 of the system 200 is shown. The controller 202 includes a processor 204, and a memory 206 communicably coupled to the processor 204. The memory 206 may store instructions executable by the processor 204 to implement the system 200. The system 200 further includes an interface 208. The interface 208 may include a variety of interfaces, for example, interfaces for data input and output devices, referred to as I/O devices, storage devices, and the like. The interface 208 may also provide a communication pathway for one or more components of the system 200. The system 200 further includes a database 250 communicably coupled to the controller 202. The database 250 may be configured to store data generated during execution of instructions by the processor 204 in order to implement the system 200. The data may include, without limitations, a log of operations of each of the evaporator units 102 (shown in FIG. 1A).

Referring now to FIGs. 1A, 1B, and 2, in one or more embodiments, the system 200 includes a processing engine 210. The processing engine 210 may be implemented as a combination of hardware and programming (for example, programmable instructions) to implement one or more functionalities of the processing engine 210. In some examples, the processing engine 210 may be implemented by electronic circuitry.

The processing engine 210 may include an evaporator unit mode engine 212, a fan speed engine 214, an evaporator unit operation engine 216, and other engine(s) 218. The other engine(s) 218 may include engines configured to perform one or more functions ancillary functions associated with the processing engine 210.

The evaporator unit mode engine 212 is configured to receive, from each of the plurality of evaporator units 102, a current state of operation of the respective evaporator unit 102. A state of operation of each evaporator unit includes the first and second modes of operation. In one or more embodiments, the evaporator units 102 may be operating at the first mode of operation, by default. In one or more embodiments, the first and second modes of operation of each evaporation unit correspond to a cooling mode of operation and a defrost mode of operation, respectively. During the cooling mode of operation of an evaporator unit, a respective fan is configured to operate at a non-zero speed. During the defrost mode of operation of the evaporator unit, the respective fan is configured to stop operating.

The fan speed engine 214 is configured to receive a current speed of the fan 112 of the respective evaporator unit 102. In one or more embodiments, the speed of the fan may be any one of first, second, third and fourth speeds. In one or more embodiments, the first speed may correspond to a default operating speed of the fan 112.

The evaporator unit operation engine 216 is configured to, responsive to the state of operation of the plurality of evaporator units 102, operate each of the plurality of evaporator units 102, to change the speed of the respective fans 112 from the first speed to a speed different from the first speed. Operation of the fans 112 of the plurality of evaporator units 102 at the speed different from the first speed enables the plurality of evaporator units 102 to operate within a desirable range of cooling efficiency.

In one or more embodiments, operation of the fans 112 of the plurality of evaporator units 102 at the speed different from the first speed enables a noise of operation of the plurality evaporator units 102 to be less relative to the operation of the fans 112 of the plurality of evaporator units 102 in the first speed.

In one or more embodiments, one or more evaporator units 102 from the plurality of evaporator units 102 may switch from operating in the first mode to operating in the second mode. The evaporator unit operation engine 216 is configured to, responsive to the one or more evaporator units 102 of the plurality of evaporator units 102 changing from the first mode of operation to the second mode of operation, operate the respective one or more evaporator units 102 operating in the second mode of operation, to change the speed of the corresponding fans 112 from the first speed to the second speed. Responsive to one or more evaporator units of the plurality of evaporator units 102 changing from the first mode of operation to the second mode of operation, the evaporator unit operation engine 216 is further configured to operate the remaining of the plurality of evaporator units 102 operating in the first mode of operation, to change the speed of the corresponding fans 112 from the first speed to the third speed.

In one or more embodiments, the second speed of the fan 112 corresponds to a stoppage of the fan 112. The third speed of the fan 112 is greater than the first speed of the fan 112. In one or more embodiments, the third speed of the fan 112 is greater than the first speed of the fan 112 by a factor of about 10% and about 60%.

In one or more embodiments, once the defrosting operation is completed, the one or more evaporator units 102 may revert to operating in the first mode of operation. Responsive to the one or more evaporator units 102 of the plurality of evaporator units 102 reverting from the second mode of operation to the first mode of operation, the evaporator unit operation engine 214 is further configured to operate the plurality of evaporator units 102 operating in the first mode of operation, to change the speed of the corresponding fans 112 from any of the second and third speeds to the fourth speed. In one or more embodiments, the fourth speed of the fan 112 corresponds to a non-zero speed of the fan 112 lesser than the first speed of the fan 112. In one or more embodiments, the fourth speed of the fan 112 is lesser than the first speed of the fan 112 by a factor of about 10% and about 60%.

For example, if during operation of the plurality of evaporator units 102, two evaporator units (e.g., evaporator units 102-1, 102-3) change to operate in the defrost mode, the evaporator unit operation engine 216 is configured to stop the corresponding fans 112-1, 112-3 and increase the speed of the fans 112-2, 112-4, 112-5, 112-6 of the evaporator units 102-2, 102-4, 102-5, 102-6, respectively, to the third speed. As a result of increased speed of the fans 112-2, 112-4, 112-5, 112-6, greater volume of air enters the fan cross-section in order to provide additional cooling, thereby at least partially compensating when the fans 112-1, 112-3 are not operating. The increase in speed of the fans 112-2, 112-4, 112-5, 112-6 may increase their sound output; however, since the fans 112-1, 112-3 are not operating, the total sound emanating from the plurality of evaporator units 102, may not be greater relative to all the evaporator units 102 working. The total sound output may vary by less than or equal to 25%, or, less than or equal to 15%, or less than or equal to 10%.

Further, if during the operation of the plurality of evaporator units 102, the evaporator units 102-1, 102-3 revert to operating in the first mode of operation, in such an instance all the evaporator units 102 are operating in the first mode of operation. Here, the evaporator unit operation engine 216 is configured to operate evaporator units 102 so that the respective fans 112 are operating at the fourth speed. As a result of the fourth speed of the fans 112, an adequate volume of air enters the fan cross-section in order to provide user-defined cooling. Further, the decreased speed of the fans 112 relative to the first speed further facilitates a decrease in noise output of the plurality of evaporator units 102.

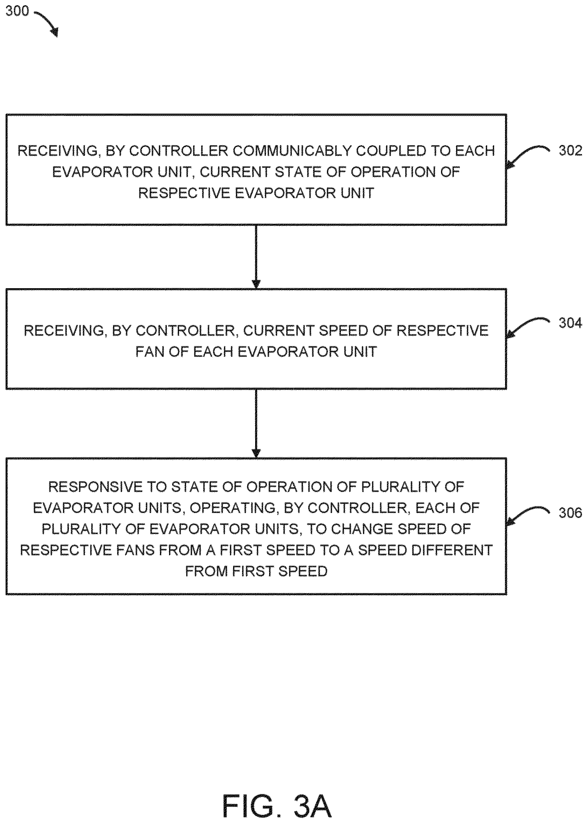

Referring to FIG. 3A, a schematic flow diagram for a method 300 for operating the plurality of evaporator units 102 is shown. Referring now to FIGs. 1A to 3A, at step 302, the method 300 includes receiving, by the controller 202 communicably coupled to each evaporator unit 102, the current state of operation of the respective evaporator unit 102. At step 304, the method 300 further includes receiving, by the controller 202, the current speed of the respective fan 112 of each of the evaporator units 102. At step 306, the method 300 further includes, responsive to the state of operation of the plurality of evaporator units 102, operating, by the controller 202, each of the plurality of evaporator units 102, to change the speed of the respective fans 112 from the first speed to the speed different from the first speed.

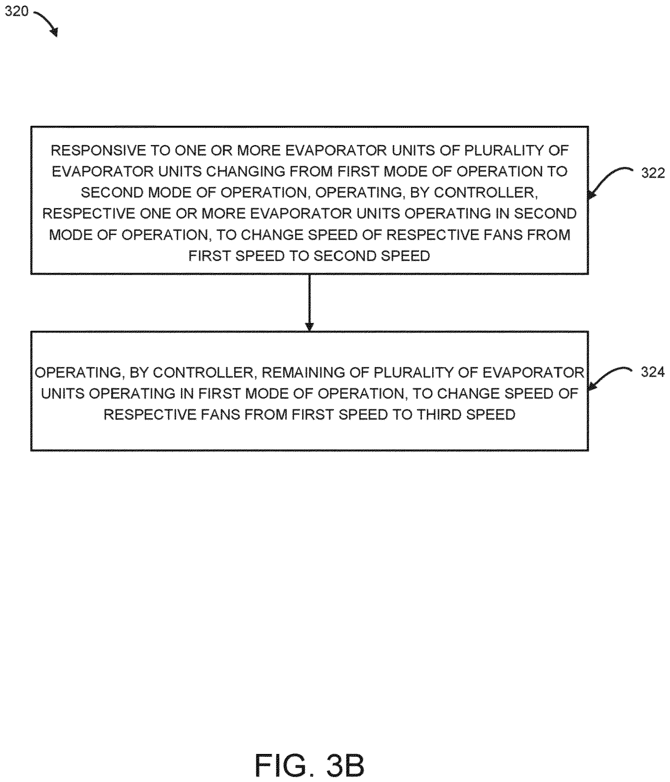

Referring to FIG. 3B, a schematic flow diagram for a method 320 for operating the plurality of evaporator units 102, when one or more evaporator units 102 are changing from first mode of operation to the second mode of operation is shown. Referring now to FIGs. 1A to 3B, responsive to the one or more evaporator units 102 of the plurality of evaporator units 102 changing from the first mode of operation to the second mode of operation, at step 322, the method 320 includes operating, by the controller 202, the respective one or more evaporator units 102 operating in the second mode of operation, to change the speed of the corresponding fans 112 from the first speed to the second speed. Further, responsive to the one or more evaporator units 102 of the plurality of evaporator units 102 changing from the first mode of operation to the second mode of operation, at step 324, the method 320 further includes operating, by the controller 202, the remaining of the plurality of evaporator units 102 operating in the first mode of operation, to change the speed of the corresponding fans 112 from the first speed to the third speed.

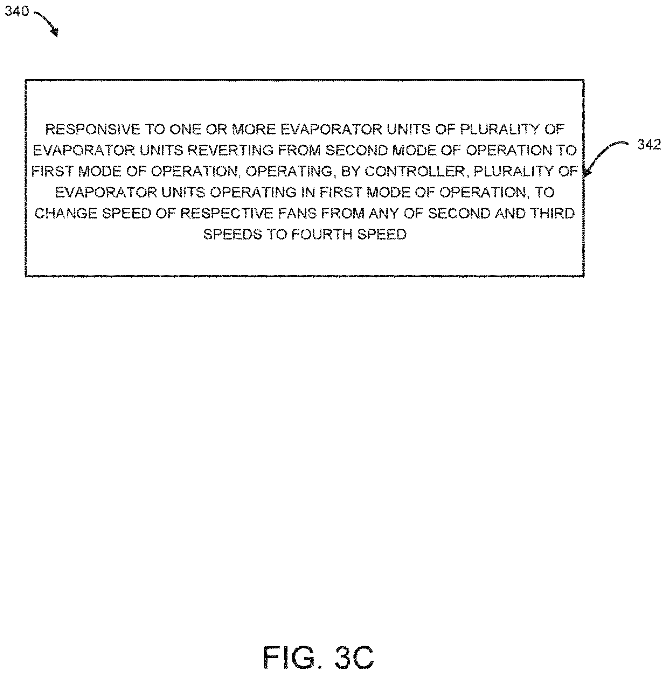

Referring to FIG. 3C, a schematic flow diagram for a method 340 for operating the plurality of evaporator units 102, when one or more evaporator units 102 are reverting from second mode of operation to the first mode of operation is shown. Referring now to FIGs. 1A to 3C, responsive to the one or more evaporator units 102 of the plurality of evaporator units 102 reverting from the second mode of operation to the first mode of operation, at step 342, the method 340 includes operating, by the controller 202, the plurality of evaporator units 102 operating in the first mode of operation, to change the speed of the corresponding fans 112 from any of the second and third speeds to the fourth speed.

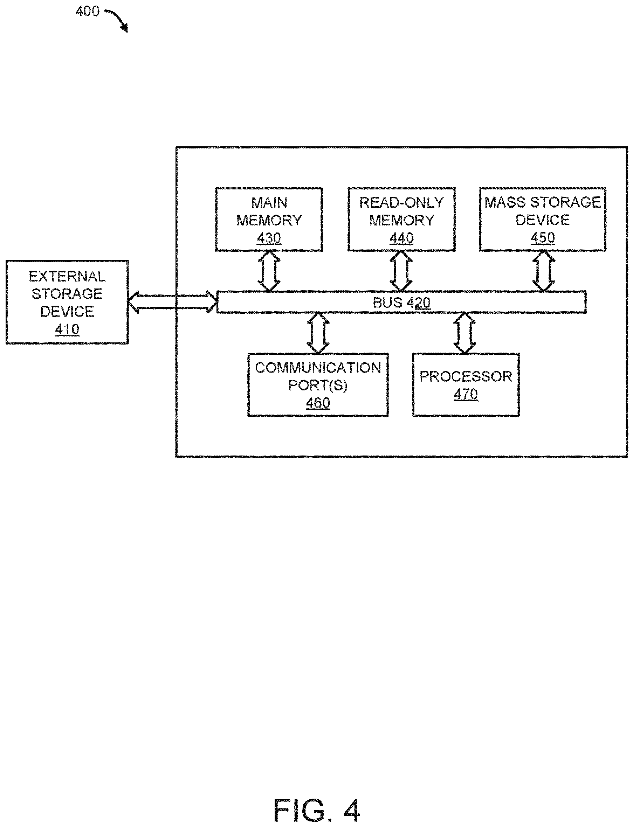

FIG. 4 is an exemplary schematic block diagram of a hardware system used for implementing the system 200. As shown in FIG. 4, a computer system 400 can include an external storage device 410, a bus 420, a main memory 430, a read only memory 440, a mass storage device 450, communication port 460, and a processor 470. A person skilled in the art will appreciate that the computer system may include more than one processor and communication ports. Examples of processor 470 include, but are not limited to, an Intel^{®} Itanium^{®} or Itanium 2 processor(s), or AMD^{®} Opteron^{®} or Athlon MP^{®} processor(s), Motorola^{®} lines of processors, FortiSOC^{™} system on chip processors or other future processors. Processor 470 may include various modules. Communication port 460 can be any of an RS-232 port for use with a modem-based dialup connection, a 10/100 Ethernet port, a Gigabit or 10 Gigabit port using copper or fibre, a serial port, a parallel port, or other existing or future ports. Communication port 460 may be chosen depending on a network, such a Local Area Network (LAN), Wide Area Network (WAN), or any network to which computer system connects. Memory 430 can be Random Access Memory (RAM), or any other dynamic storage device commonly known in the art. Read-only memory 440 can be any static storage device(s) e.g., but not limited to, a Programmable Read Only Memory (PROM) chips for storing static information e.g., start-up or BIOS instructions for processor 470. Mass storage 450 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATA arrays), available from various vendors including Dot Hill Systems Corp., LaCie, Nexsan Technologies, Inc. and Enhance Technology, Inc.

Bus 420 communicatively couples processor(s) 470 with the other memory, storage, and communication blocks. Bus 420 can be, e.g., a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor 470 to software system.

Optionally, operator and administrative interfaces, e.g., a display, keyboard, and a cursor control device, may also be coupled to bus 420 to support direct operator interaction with a computer system. Other operator and administrative interfaces can be provided through network connections connected through communication port 460. The external storage device 410 can be any kind of external hard-drives, floppy drives, IOMEGA^{®} Zip Drives, Compact Disc - Read Only Memory (CD-ROM), Compact Disc-Re-Writable (CD-RW), Digital Video Disk-Read Only Memory (DVD-ROM). Components described above are meant only to exemplify various possibilities. In no way should the aforementioned exemplary computer system limit the scope of the present disclosure.

While the invention has been described with reference to exemplary embodiments, it will be understood by those skilled in the art that various changes may be made and equivalents may be substituted for elements of the described embodiments without departing from the scope of the invention as defined by the appended claims. Modifications may be made to adopt a particular situation or material to the teachings of the invention without departing from the scope of the claims. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A method for operating a plurality of evaporator units (102), the method comprising:
receiving, by a controller (202) communicably coupled to each evaporator unit, a current state of operation of the respective evaporator unit, wherein a state of operation of each evaporator unit comprises first and second modes of operation; and
receiving, by the controller, a current speed of respective fans (112) of each evaporator unit,
wherein, responsive to the state of operation of the plurality of evaporator units, the method further comprises:
operating, by the controller, each of the plurality of evaporator units, to change the speed of the respective fans from a first speed to a speed different from the first speed,
wherein operation of the fans of the plurality of evaporator units at the speed different from the first speed enables the plurality of evaporator units to operate within a desirable range of cooling efficiency.

2. The method of claim 1,
wherein the first speed of a fan corresponds to a default operating speed of the fan, and/or
wherein operation of the fans of the plurality of evaporator units at the speed different from the first speed enables a noise of operation of the plurality evaporator units to be less relative to the operation of the fans of the plurality of evaporator units in the first speed.

3. The method of claim 1 or 2, wherein the first and second modes of operation of each evaporation unit correspond to a cooling mode of operation and a defrost mode of operation, respectively, wherein, during the cooling mode of operation of an evaporator unit, a respective fan is configured to operate at a non-zero speed, and wherein during the defrost mode of operation of the evaporator unit, the respective fan is configured to stop operating.

4. The method of claim 1, 2 or 3 wherein responsive to one or more evaporator units of the plurality of evaporator units changing from the first mode of operation to the second mode of operation, the method further comprises:
operating, by the controller, the respective one or more evaporator units operating in the second mode of operation, to change the speed of the respective fans from the first speed to a second speed; and
operating, by the controller, the remaining of the plurality of evaporator units operating in the first mode of operation, to change the speed of the respective fans from the first speed to a third speed.

5. The method of claim 4, wherein the second speed of the fan corresponds to a stoppage of the fan, and wherein the third speed of the fan is greater than the first speed of the fan, and/or
wherein the third speed of the fan is greater than the first speed of the fan by a factor of between 10% and 60%.

6. The method of claim 4 or 5, wherein, responsive to the one or more evaporator units of the plurality of evaporator units reverting from the second mode of operation to the first mode of operation, the method further comprises:
operating, by the controller, the plurality of evaporator units operating in the first mode of operation, to change the speed of the respective fans from any of the second and third speeds to a fourth speed.

7. The method of claim 6, wherein the fourth speed of the fan corresponds to a non-zero speed of the fan less than the first speed of the fan, optionally wherein the fourth speed of the fan is less than the first speed of the fan by a factor of between 10% and 60%.

8. A system for operating a plurality of evaporator units, the system comprising:
a controller communicably coupled to each evaporator unit, the controller comprising a processor and a memory communicably coupled to the processor, the memory storing instructions executable by the processor, the controller configured to:
receive a current state of operation of the respective evaporator unit, wherein a state of operation of each evaporator unit comprises a first mode and a second mode of operation; and
receive a current speed of the respective fan of each evaporator unit,
wherein, responsive to the state of operation of the plurality of evaporator units, the controller is further configured to:
operate each of the plurality of evaporator units, to change the speed of the respective fans from a first speed to a speed different from the first speed,
wherein operation of the fans of the plurality of evaporator units at the speed different from the first speed enables the plurality of evaporator units to operate within a desirable range of cooling efficiency.

9. The system of claim 8, wherein the first speed of a fan corresponds to a default operating speed of the fan.

10. The system of claim 8 or 9, wherein operation of the fans of the plurality of evaporator units at the speed different from the first speed enables a noise of operation of the plurality evaporator units to be less relative to the operation of the fans of the plurality of evaporator units in the first speed.

11. The system of claim 8, 9 or 10, wherein the first and second modes of operation of each evaporation unit correspond to a cooling mode of operation and a defrost mode of operation, respectively, wherein, during the cooling mode of operation of an evaporator unit, a respective fan is configured to operate at a non-zero speed, and wherein during the defrost mode of operation of the evaporator unit, the respective fan is configured to stop operating.

12. The system of any of claims 8 to 11, wherein responsive to one or more evaporator units of the plurality of evaporator units changing from the first mode of operation to the second mode of operation, the controller is further configured to:
operate the respective one or more evaporator units operating in the second mode of operation, to change the speed of the respective fans from the first speed to a second speed; and
operate the remaining of the plurality of evaporator units operating in the first mode of operation, to change the speed of the respective fans from the first speed to a third speed.

13. The system of claim 12, wherein the second speed of the fan corresponds to a stoppage of the fan, and wherein the third speed of the fan is greater than the first speed of the fan, and/or
wherein the third speed of the fan is greater than the first speed of the fan by a factor of between 10% and 60%.

14. The system of claim 12 or 13, wherein, responsive to the one or more evaporator units of the plurality of evaporator units reverting from the second mode of operation to the first mode of operation, the controller is further configured to:
operate the plurality of evaporator units operating in the first mode of operation, to change the speed of the respective fans from any of the second and third speeds to a fourth speed.

15. The system of claim 14, wherein the fourth speed of the fan corresponds to a non-zero speed of the fan less than the first speed of the fan, optionally wherein the fourth speed of the fan is less than the first speed of the fan by a factor of between 10% and 60%.
